# FASCICULE DE BREVET EUROPEEN

(11) **EP 0 329 543 B1**
(45) Date de publication et mention de la délivrance du brevet: **07.04.1993**
(21) Numéro de dépôt: 89400403.5
(22) Date de dépôt: 13.02.1989
(51) Int. Cl.: A23C 15/12, A23L 1/19, A23C 13/14

(54) **Crème fraîche modifiée et beurre enrichi à l'huile végétale**
Modifizierter frischer Rahm und mit pflanzlichem Öl angereicherte Butter
Modified dairy cream and butter fortified with vegetable oil

(30) Priorité: 15.02.1988 FR 8801743
(43) Date de publication de la demande: 23.08.1989
(73) Titulaire: UNION AGRICOLE DES COOPERATIVES LAITIERES Isigny-sur-Mer et Sainte-Mère Eglise, F-14230 Isigny-sur-Mer (FR)
(72) Inventeur: Chincholle, Roger, F-14450 Grandcamp Maisy (FR); Koning, Jean, F-50360 Picauville (FR); Delahaye, Daniel, F-14230 Isigny-sur-Mer (FR)
(74) Mandataire: Rodhain, Claude

(56) Documents cités:
- EP-A- 0 244 009
- AU-A- 529 036
- DE-A- 2 245 814
- DE-A- 3 435 269
- FR-A- 2 210 351
- FR-A- 2 438 973
- RESEARCH DISCLOSURE, no. 166, février 1988, page 13, résumé no. 16602; "Low calorie spread with protein"

## Description

L'invention a pour objet un procédé de fabrication d'un produit laitier enrichi en acides gras polyinsaturés par mélange d'un produit laitier de base avec de la matière riche en acides gras polyinsaturés et à teneur garantie en vitamine E.

Les acides gras polyinsaturés proviennent essentiellement des huiles végétales, qui en sont très riches. L'apport d'acides gras polyinsaturés est indispensable pour l'homme, car il ne peut pas les synthétiser. Or, depuis plusieurs années des enquêtes nutritionnelles ont été menées qui ont montré que la part d'acides gras polyinsaturés dans l'alimentation est faible. A l'inverse, les acides gras saturés, provenant de la consommation de graisses d'origine animale, sont en augmentation, ceci étant dû à une part plus importante consacrée à la viande dans l'alimentation quotidienne. Or, il s'avère que la diminution des graisses polyinsaturés,essentielles pour l'homme par rapport aux graisses saturées, est l'un des facteurs responsable de l'athérome et de ses complications cliniques cardiovasculaires, thromboses et accidents ischémiques.

La nécessité de faire absorber à l'homme des acides gras polyinsaturés est indéniable. Cependant, une consommation exclusive d'huile végétale par exemple peut contribuer à aggraver les carences vitaminiques latentes De plus, l'hydrogénation fréquemment utilisée pour modifier les points de fusion des huiles végétales entraîne la perte de certaines propriétés particulières des acides gras essentiels Le fait de mélanger les huiles végétales à d'autres matières pour favoriser une consommation autre que des huiles végétales ont été l'objet de nombreux brevets. Le brevet français 2 245 291 a trait à un produit laitier à teneur accrue en graisses polyinsaturés, ajoutées sous la forme d'huile végétale, l'ensemble étant séché. Le brevet français 1180 286 concerne un procédé de préparation d'un aliment à partir d'une graisse réduisant le taux de cholestérol dans l'organisme humain; le procédé consiste en une homogénéisation de la matière grasse végétale avec un lait exempt de matière grasse; le produit est soumis à évaporation, émulsionné et refroidi puis converti en une poudre de lait. Le brevet suisse n° 440394 concerne un procédé et sa substance permettant une émulsion parfaite entre un produit laitier et une huile ou graisse. Le brevet français n° 82 03988 a trait à des produits de base de lait enrichi en huile végétale et en vitamines A et B, par émulsion huile-eau sous haute température dans un appareil micronisateur, émulsion huile-eau introduite sous bonne agitation dans le lait.

Le brevet allemand 2 245 814 décrit un procédé de préparation d'une matière grasse à tartiner ayant une teneur en matière grasse d'environ 40 %. Ce procédé consiste à mélanger du beurre et/ou de la graisse végétale et/ou de l'huile végétale avec de l'eau et un mélange de protéine de babeurre dégradée et dénaturée par la chaleur et de protéine de lait naturelle.

Ce procédé aboutit à l'obtention d'un produit qui diffère fortement du produit naturel de départ (beurre).

La présente invention propose de modifier la formule lipidique des graisses butyriques pour répondre aux exigences nutritionnelles actuelles sans sacrifier les qualités nutritionnelles et oganoleptiques des produits traditionnels, entre autres, la crème fraîche et le beurre par addition d'huile végétale (riche en acides gras polyinsaturés essentiels et vitamine E). Le caractère naturel des produits d'origine n'est pas modifié.

Les étapes d'un premier procédé de fabrication du beurre modifié conforme à l'invention sont les suivantes:
- on prépare un pré-mélange contenant 44 à 83 % d'huile végétale, 0 à 47 % de beurre, 9 à 17 % d'eau et/ou babeurre, à une température comprise entre 35 et 40°C par agitation;
- on homogénéise ce pré-mélange sous une pression comprise en 50 et 200 bars,
- on ajoute à ce pré-mélange, représentant 18-80 % du produit final, 20-82 % de beurre non modifié,
- on malaxe le pré-mélange avec le beurre non modifié.

Le produit final est refroidi pour être prêt au conditionnement.

Selon une forme de réalisation préférée, les différentes étapes sont les suivantes :
- préparation du pré-mélange contenant 44 à 54 % d'huile végétale, 37 à 47 % de beurre, 9 à 17 % d'eau et/ou babeurre, à une température comprise entre 35 et 40°C par agitation,
- homogénéisation de ce pré-mélange sous une pression comprise entre 100 et 150 bars,
- addition au pré-mélange, constituant 52 % du produit final, 48 % de beurre non modifié,
- malaxage du pré-mélange avec le beurre non modifié.

Selon un deuxième procédé conforme à l'invention, on n'utilise plus un homogénéisateur, mais un échangeur à surface raclée :es étapes du second procédé sont les suivantes :
- mélange de 58 à 82 % de beurre, 15 à 35 % d'huile végétale, 3 à 7 % d'eau et/ou babeurre, à une température comprise entre 40 et 50°C,
- passage dans un échangeur à surface raclée à trois corps dans lequel, le mélange est d'abord refroidi à une température comprise entre 10° et 40°C dans un premier corps; puis, le mélange se fait parfaitement et se réchauffe légèrement dans le deuxième corps; enfin, il est refroidi jusqu'à une température entre 6 - 25°C dans le troisième corps.

D'autres proportions préférées pour ce second procédé sont les suivantes :
- mélange de 65 à 78 % de beurre, 20 à 30% d'huile végétale, 3 à 5 % d'eau et/ou babeurre à une température comprise entre 45 et 50°C,
- passage dans un échangeur à surface raclée à trois corps dans lequel le .mélange est refroidi à une température comprise entre 20 et 30°C dans le premier corps, le mélange se fait parfaitement et se réchauffe légèrement dans le deuxième corps; enfin le mélange est refroidi jusqu'à 6-25°C.

Ces deux procédés ainsi décrits permettent d'obtenir un beurre enrichi en acides gras polyinsaturés.

En ce qui concerne la crème fraîche, celle-ci est enrichie en la mélangeant avec de l'huile végétale et avec du lait écrémé. Seul le procédé avec l'étape d'homogénéisation est employé ici, à l'inverse de celui du beurre modifié pour lequel deux procédés sont possibles.

Le procédé d'enrichissement de la crème fraîche est caractérisé par deux étapes :
a) on mélange 63 à 83 % de crème fraîche, 17 % d'huile et/ou 0 à 20 % de lait écrémé à une température de 15 à 20°C,
b) on homogénéise ce mélange sous une pression comprise entre 50 et 200 bars permettant d'obtenir la crème fraîche modifiée.

La présente invention va être approfondie par une description plus détaillée qui va suivre, présentant des caractéristiques et avantages de l'invention.

Concernant le beurre modifié, on ajoute à un pré-mélange homogénéisé, huile + beurre + eau et/ou babeurre, du beurre, l'ensemble étant malaxé. Le beurre supplémentaire est ajouté après l'homogénéisation pour permettre un meilleur écoulement dans l'homogénéisateur. L'huile végétale utilisée est une huile de tournesol de préférence raffinée non hydrogénée présentant ainsi l'avantage d'être pure et de grande qualité diététique, apportant donc les acides gras essentiels et la vitamine E.

Concernant la teneur en vitamines du beurre modifié, la teneur est au minimum pour les vitamines A de 1500 U.I., pour les vitamines D de 100 U.I. et pour les vitamines E de 15 mg.

Les vitamines E ont comme caractéristique principale de favoriser la conservation des produits.

La teneur en type d'acides différents est
- pour les acides gras saturés de 47 %
- pour les acides gras monoinsaturés de 32 %
- pour les acides gras polyinsaturés de 21 %

Le beurre modifié présente des qualités aromatiques se rapprochant du beurre. Son point de fusion inférieur à celui du beurre, en fait un produit qui possède une bonne aptitude à la tartinabilité. Sa période de conservation est de 60 jours pendant lesquels le produit garde ses propriétés, à condition qu'il soit entreposé dans une enceinte froide à une température positive de conservation inférieure ou égale à +6°C jusqu'à l'utilisation.

Concernant la crème fraîche modifiée, l'huile végétale utilisée est une huile de tournesol raffinée non hydrogénée.

Sa teneur minimale en vitamines est la suivante :
- Vitamine A :: 600 U.I.
- Vitamine D :: 90 U.I.
- Vitamine E :: 9 mg

La teneur en type d'acides différents est :
. pour les acides gras saturés : 49 %
. pour les acides gras monoinsaturés : 30 %
. pour les acides gras polyinsaturés : 21 %

Cette crème fraîche modifiée présente, sur le plan organoleptique, des qualités aromatiques se rapprochant de celles d'une crème fraîche dénaturée. L'onctuosité de la crème est conservée, lui conférant toute sa qualité.

Sa durée de conservation est de 30 jours pendant lesquels le produit garde toutes ses propriétés, sous les mêmes conditions que celles du beurre enrichi.

Les deux produits modifiés, beurre et crème fraîche, ont une teneur équilibrée en matière grasse laitière et végétale, et une teneur en vitamine E importante. Ces produits présentent ainsi les caractéristiques d'être un bon complément à l'alimentation quotidienne équilibrant le déficit du type d'acides gras polyinsaturés essentiels et de cette vitamine, déficit qui sont la source de maladies cardiovasculaires.

## Revendications

1. Procédé de fabrication d'un produit laitier enrichi en acides gras polyinsaturés par mélange d'un produit laitier de base constitué par du beurre ou de la crème fraîche, avec de la matière riche en acides gras polyinsaturés, du type selon lequel le produit de base est mélangé avec de l'eau et/ou babeurre ainsi qu'avec de l'huile végétale, l'ensemble étant ensuite malaxé, caractérisé en ce que pour obtenir du beurre enrichi en acides gras polyinsaturés on réalise les étapes suivantes :
- on prépare un pré-mélange contenant 44 à 83 % d'huile végétale, 0 à 47 % de beurre, 9 à 17 % d'eau et/ou babeurre, à une température comprise entre 35 et 40°C par agitation,
- on homogénéise ce pré-mélange sous une pression comprise entre 50 et 200 bars,
- on ajoute à ce pré-mélange, représentant 18-80 % du produit final, 20-82 % de beurre non modifié,
- on malaxe le pré-mélange avec le beurre non modifié.

2. Procédé selon la revendication 1, caractérisé en ce que la produit final obtenu est refroidi pour être prêt au conditionnement.

3. Procédé selon l'une des revendications 1 et 2, caractérisé en ce que pour obtenir du beurre enrichi en acides gras polyinsaturés on réalise les étapes suivantes :
- on prépare un pré-mélange contenant 44 à 54 % d'huile végétale, 37 à 47 % de beurre et 9 à 17 % d'eau et/ou babeurre, à une température comprise entre 35 et 40° C par agitation,
- on homogénéise ce pré-mélange sous une pression comprise entre 100 et 150 bars,
- on ajoute à ce pré-mélange, représentant 52 % de produit final, 48 % de beurre non modifié,
- on malaxe le pré-mélange avec le beurre non modifié.

4. Procédé de fabrication d'un produit laitier enrichi en acides gras polyinsaturés par mélange d'un produit laitier de base constitué par du beurre ou de la crème fraîche, avec de la matière riche en acides gras polyinsaturés, du type selon lequel le produit de base est mélangé avec de l'eau et/ou babeurre ainsi qu'avec de l'huile végétale, l'ensemble étant ensuite malaxé, caractérisé en ce que pour obtenir le beurre enrichi en acides gras polyinsaturés on réalise les étapes suivantes :
- mélange de 58 à 82 % de beurre, 15 à 35 % d'huile végétale, 3 à 7 % d'eau et/ou babeurre, à une température comprise entre 40 et 50°C,
- passage dans un échangeur à surface raclée à trois corps dans lequel :
. le mélange est refroidi à une température comprise en 10 et 40°C dans le premier corps,
. le mélange se fait parfaitement et se réchauffe légèrement dans le deuxième corps,
. le mélange est refroidi jusqu'à une température entre 6 et 25°C dans le troisième corps.

5. Procédé selon la revendication 4, caractérisé en ce que pour obtenir le beurre enrichi en acides gras polyinsaturés, on réalise les étapes suivantes :
- mélange de 65 à 78 % de beurre, 20 à 30 % d'huile végétale, 3 à 5 % d'eau et/ou babeurre, à une température comprise entre 45 et 50°C,
- passage dans un échangeur à surface raclée à trois corps dans lequel :
. le mélange est refroidi à une température comprise entre 20 et 30°C dans le premier corps,
. le mélange se fait parfaitement et se réchauffe légèrement dans le deuxième corps,
. le mélange est refroidi jusqu'à une température entre 10-20°C dans le troisième corps.

6. Procédé de fabrication d'un produit laitier enrichi en acides gras polyinsaturés par mélange d'un produit laitier de base constitué par du beurre ou de la crème fraîche, avec de la matière riche en acides gras polyinsaturés, du type selon lequel le produit de base est mélangé avec de l'eau et/ou babeurre ainsi qu'avec de l'huile végétale, l'ensemble étant ensuite malaxé, caractérisé en ce que pour obtenir une crème fraîche modifiée enrichie en acides ras polyinsaturés, on réalise les étapes suivantes :
- mélange à 63 à 83 % de crème fraîche, 17 % d'huile végétale et/ou de 0 à 20 % de lait écrémé à une température de 15 à 20°C,
- homogénéisation de ce mélange sous une pression comprise entre 50 et 200 bars permettant d'obtenir une crème fraîche modifiée.

## Claims

1. A process for making a dairy produce enriched with polyunsaturated fatty acids by mixing a base dairy produce formed of butter or fresh cream, with a polyunsaturated fatty acid-rich substance of a type in which said base produce is mixed with water and/or buttermilk together with vegetable oil, then the whole being worked, characterized in that the following steps are taken with a view to obtaining polyunsaturated fatty acid-enrich butter, i.e. :
- a premix is prepared which includes from 44 to 83 % vegetable oil, from 0 to 47 % butter, from 9 to 17 % water and/or buttermilk, at a temperature in the range from 35° to 40°C, under stirring,
- said premix is homogenized under a pressure from 50 to 200 bars,
- from 20 to 82 % non-modified butter is added to said premix, i.e. from 18 to 80 % of the final produce,
- said premix is worked with said non-modified butter.

2. A process as recited in claim 1, characterized in that the resultant final produce is cooled to be ready for packaging.

3. A process as recited in either claim 1 and 2, characterized in that the following steps are taken to obtain polyunsatured fatty acid-enrich butter, i.e. :
- a premix is prepared which includes from 44 to 54 % vegetable oil, from 37 to 47 % butter, from 9 to 17 % water and/or buttermilk, at a temperature in the range from 35° to 40°C, under stirring,
- said premix is homogenized under a pressure from 100 to 150 bars,
- 48 % non-modified butter is added to said premix, i.e. 52 % of the final produce,
- said premix is worked with said non-modified butter.

4. A process for making a dairy produce enriched with polyunsaturated fatty acids by mixing a base dairy produce formed of butter or fresh cream, with a polyunsaturated fatty acid-rich substance of a type in which said base produce is mixed with water and/or buttermilk together with vegetable oil, then the whole being worked, characterized in that the following steps are taken to obtain polyunsaturated fatty acid-enrich butter, i.e. :
- from 58 to 82 % butter, from 15 to 35 % vegetable oil, from 3 to 7 % water and/or buttermilk are mixed at a temperature in the range from 40° to 50°C,
- said mixture is passed through a three-body exchanger having a scraped surface in which:
- said mixture is cooled at a temperature from 10° to 40°C in the first body,
- said mixing is perfectly carried out and results in a slight reheating thereof in the second body,
- said mixture is cooled to a temperature from 6° to 25°C in the third body.

5. A process as recited in claim 4, characterized in that the following steps are taken to obtain said polyunsatured fatty acid-enrich butter, i.e. :
- from 65 to 78 % butter, from 20 to 30 % vegetable oil, from 3 to 5 % water and/or buttermilk are mixed at a temperature from 45° to 50°C,
- said mixture is passed through a three-body exchanger having a scraped surface in which:
- said mixture is cooled at a temperature from 20° to 30°C in the first body,
- said mixing is perfectly carried out and results in a slight reheating thereof in the second body,
- said mixture is cooled to a temperature in a range from 10° to 20°C in the third body.

6. A process for making a dairy produce enriched with polyunsaturated fatty acids by mixing a base dairy produce formed of butter or fresh cream, with a polyunsaturated fatty acid-rich substance, of a type in which said base produce is mixed with water and/or buttermilk together with vegetable oil, the whole being then worked, characterized in that the following steps are taken to obtain polyunsatured fatty acid-enrich, modified, fresh cream, i.e. :
- from 63 to 83 % fresh cream, 17 % vegetable oil and/or from 0 to 20 % skrimmed milk are mixed at a temperature from 15° to 20°C, and
- said mixture is homogenized under a pressure from 50 to 200 bars, thereby allowing a modified fresh cream to be obtained.

## Patentansprüche

1. Herstellungsverfahren für ein mit mehrfach ungesättigten Fettsäuren angereichertes Milchprodukt durch Mischen eines auf Butter oder Rahm basierenden Milchprodukts mit einer an mehrfach ungesättigten Fettsäuren reichen Materie wobei das Basisprodukt mit Wasser und/oder Buttermilch sowie mit Pflanzenöl gemischt und anschliessend geknetet wird, dadurch gekennzeichnet, dass um eine mit mehrfach ungesättigten Fettsäuren angereicherte Butter zu erhalten, die folgenden Verfahrensschritte durchgeführt werden:
- Vorbereiten einer Vormischung mit 44 bis 83% Pflanzenöl, 0 bis 47% Butter, 9 bis 17% Wasser und/oder Buttermilch bei einer Temperatur zwischen 35 und 40°C durch Bewegung,
- Homogenisieren dieser Vormischung unter einem Druck von zwischen 50 und 200 bar,
- Zufügen zu dieser Vormischung, welche 18 bis 80 % des Endprodukts ausmacht, von 20 bis 82% nicht modifizierter Butter,
- Verkneten der Vormischng mit der nicht modifizierten Butter.

2. Verfahren nach Anspruch 1, dadurch gekennzeichnet, dass das erhaltene Endproduckt zur Verpackung gekühlt wird.

3. Verfahren nach Anspruch 1 oder 2, dadurch gekennzeichnet, dass um mit mehrfach ungesättigten Fettsäuren angereicherte Butter zu erhalten, die folgenden Verfahrensschritte durchgeführt werden:
- Vorbereiten einer Vormischung mit 44 bis 54% Pflanzenöl, 37 bis 47% Butter, 9 bis 17% Wasser und/oder Buttermilch bei einer Temperatur zwischen 35 und 40°C durch Bewegung,
- Homogenisieren dieser Vormischung unter einem Druck von zwischen 100 und 150 bar,
- Zufügen zu dieser Vormischung, welche 52 % des Endprodukts ausmacht, von 48% nicht modifizierter Butter,
- Verkneten der Vormischng mit der nicht modifizierten Butter.

4. Herstellungsverfahren für ein mit mehrfach ungesättigten Fettsäuren angereichertes Milchprodukt durch Mischen eines auf Butter oder Rahm basierenden Milchprodukts mit einer an mehrfach ungesättigten Fettsäuren reichen Materie wobei das Basisprodukt mit Wasser und/oder Buttermilch sowie mit Pflanzenöl gemischt und anschliessend geknetet wird, dadurch gekennzeichnet, dass um eine mit mehrfach ungesättigten Fettsäuren angereicherte Butter zu erhalten, die folgenden Verfahrensschritte durchgeführt werden:
- Mischen von 58 bis 82% Butter, 15 bis 35% Pflanzenöl, und 3 bis 7% Wasser und/oder Buttermilch bei einer Temperatur zwischen 40 und 50°C,
- Durchlaufen eines Austauschers mit gekratzter Oberfläche und mit drei Stationen, in dem:
- in der ersten Station die Mischung auf eine Temperatur zwischen 10 und 40°C abgekühlt wird,
- in der zweiten Station die Mischung vollständig durchgeführt und leicht erwärmt wird,
- in der dritten Station die Mischung auf eine Temperatur zwischen 6 und 25°C abgekühlt wird.

5. Verfahren nach Anspruch 4, dadurch gekennzeichnet, dass um eine mit mehrfach ungesättigten Fettsäuren angereicherte Butter zu erhalten, die folgenden Verfahrensschritte durchgeführt werden:
- Mischen von 65 bis 78% Butter, 20 bis 30% Pflanzenöl, und 3 bis 5% Wasser und/oder Buttermilch bei einer Temperatur zwischen 45 und 50°C,
- Durchlaufen eines Austauschers mit gekratzter Oberfläche und mit drei Stationen, in dem:
- in der ersten Station die Mischung auf eine Temperatur zwischen 20 und 30°C abgekühlt wird,
- in der zweiten Station die Mischung vollständig durchgeführt und leicht erwärmt wird,
- in der dritten Station die Mischung auf eine Temperatur zwischen 10 und 20°C abgekühlt wird.

6. Herstellungsverfahren für ein mit mehrfach ungesättigten Fettsäuren angereichertes Milchprodukt durch Mischen eines auf Butter oder Rahm basierenden Milchprodukts mit einer an mehrfach ungesättigten Fettsäuren reichen Materie wobei das Basisprodukt mit Wasser und/oder Buttermilch sowie mit Pflanzenöl gemischt und anschliessend geknetet wird, dadurch gekennzeichnet, dass um einen mit mehrfach ungesättigten Fettsäuren angereicherten Rahm zu erhalten, die folgenden Verfahrensschritte durchgeführt werden:
- Mischen von 63 bis 83% Rahm, 17% Pflanzenöl, und/oder 0 bis 20% entrahmter Milch bei einer Temperatur zwischen 15 und 20°C,
- Homogenisieren dieser Mischung unter einem Druck von zwischen 50 und 200 bar, sodass ein modifizierter Rahm erhalten wird.
